# FASCICULE DE BREVET EUROPEEN

(11) **EP 0 935 110 B1**
(45) Date de publication et mention de la délivrance du brevet: **31.03.2004**
(21) Numéro de dépôt: 99400267.3
(22) Date de dépôt: 05.02.1999
(51) Int. Cl.: F25J 3/04, B01D 53/04, B01D 53/047, B01D 53/22

(54) **Procédé et installation combinés de production d'air comprimé et d'au moins un gaz de l'air**
Kombiniertes Verfahren und Anlage zur Herstellung von Druckluft und mindestens einem Luftgas
Combined process and facility for producing compressed air and at least one gas from air

(30) Priorité: 05.02.1998 FR 9801346
(43) Date de publication de la demande: 11.08.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Vigor, Xavier, Chicago, Illinois 60611 (US); Ollivier, Patrice, 75016 Paris (FR); Willemot, Antoine, 91190 Gif-sur-Yvette (FR); Barry, Lionel, 94220 Charenton-le-Pont (FR)
(74) Mandataire: Le Moenner, Gabriel

(56) Documents cités:
- EP-A- 0 568 431
- US-A- 5 244 489
- US-A- 5 538 534

## Description

Quasiment toutes les industries disposent aujourd'hui d'au moins un réseau d'air comprimé pour fourniture d'air comprimé à toutes sortes de machines ou d'appareils.

De nombreuses industries exploitent par ailleurs des gaz de l'air fournis par des réseaux de distribution, des réservoirs ou des installations de production sur site.

En règle générale, les systèmes de production et de fourniture d'air comprimé et de gaz de l'air sont disjoints et indépendants, et mis en oeuvre par des opérateurs différents.

Dans le domaine particulier des groupes turbine à gaz, le document EP-A-0 568 431 décrit un couplage entre un groupe turbine à gaz et une unité de séparation de gaz de l'air ayant chacun un compresseur d'air dédié, une partie du flux d'air comprimé du compresseur du groupe turbine à gaz pouvant être combinée avec celui du compresseur de l'unité de séparation pour délester la turbine dans certaines. conditions climatiques.

Dans le domaine particulier de la métallurgie, il a été proposé, notamment dans les documents US-A-5 538 534 et US-A-5 244 489 de mettre en oeuvre un groupe de compression commun pour la fourniture d'air comprimé à des appareils de traitement de métaux, d'une part, et à une unité de séparation de gaz de l'air, d'autre part.

La présente invention a pour objet de proposer un procédé et une installation combinés de fourniture d'air comprimé à un réseau de distribution et de production d'au moins un gaz de l'air réalisant une synergie entre les systèmes de production et de fourniture de ces fluides et permettant de réduire les coûts d'investissement et d'exploitation tout en garantissant une sécurité de fourniture de gaz suffisante.

Pour ce faire, l'invention propose un procédé selon la revendication 1.

L'invention propose également une installation combinée selon la revendication 12.

Ainsi, selon l'invention, les réseaux d'air comprimé et de gaz de l'air sont interconnectables de manière à permettre une répartition des capacités d'air sous pression disponibles sur site en fonction des besoins en air comprimé et des besoins en gaz, en permettant de réduire les investissements des sources d'air sous pression, typiquement des unités de compression, ainsi que la puissance électrique installée et consommée, tout en assurant une flexibilité de production accrue.

Selon l'invention, la priorité d'affectation de l'air sous pression est donnée au système de fourniture d'air comprimé dans la mesure où ce dernier est difficilement stockable pour la fourniture de débits importants ou prolongés alors que le gaz de l'air est facilement stockable, notamment dans des réserves de sécurité pré-existantes et que les systèmes utilisateurs peuvent fréquemment se contenter d'une production sous marche réduite du système de production du gaz de l'air, le cas échéant complémentée par lesdites réserves.

Ainsi, selon une caractéristique particulière de l'invention, en mode de fonctionnement temporaire, le gaz de l'air est fourni au moins en partie par un réservoir dudit gaz, stocké typiquement sous forme liquide.

Selon une caractéristique plus particulière de l'invention, en mode de fonctionnement temporaire, le second flux est affecté en totalité à la fourniture d'air comprimé, les moyens de commutation comprenant des moyens pour isoler le système de production de gaz de la deuxième source ainsi affectée au système de fourniture d'air.

D'autres caractéristiques et avantages de la présente invention ressortiront de la description suivante de modes de réalisation, donnée à titre illustratif mais nullement limitatif, faite en relation avec les dessins annexés, sur lesquels :
la Figure 1 est une vue schématique d'un premier mode de réalisation d'une installation combinée selon l'invention;
la Figure 2 est une vue schématique analogue d'un mode de réalisation d'une installation combinée conventionelle; et
les Figures 3 et 4 illustrent respectivement les configurations des installations des Figures 1 et 2 en mode de fonctionnement temporaire, la figure 2 illustrent une installation conventionelle.

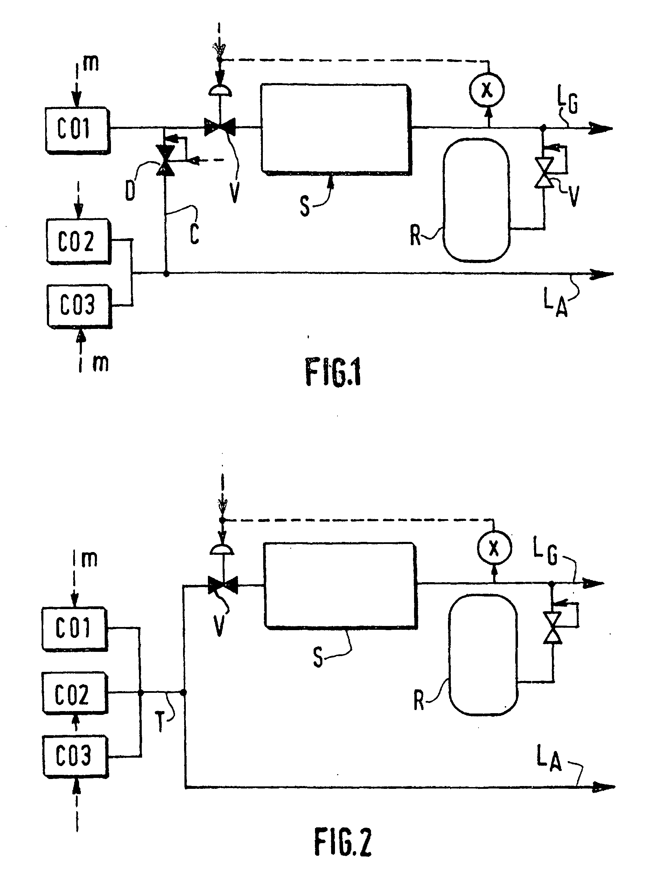

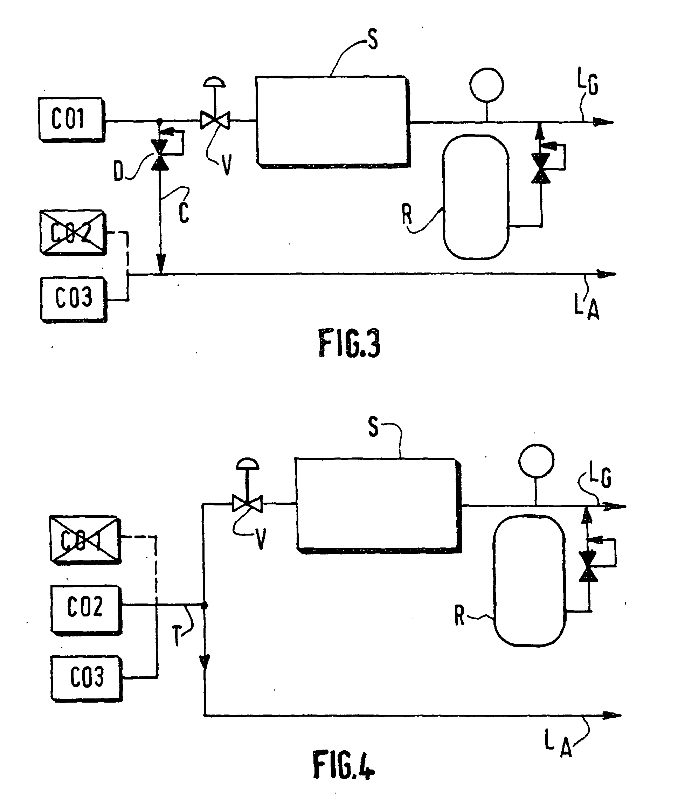

Dans l'exemple de la Figure 1 on a représenté au moins une ligne L_{A} d'un réseau de distribution d'air comprimé fourni par deux sources d'air sous pression CO2, CO3, par exemple deux unités de compression en parallèle, identiques ou différenciées.

On a représenté également au moins une ligne L_{G} d'un réseau de distribution d'au moins un gaz de l'air fourni, par séparation ou traitement d'air comprimé en provenance d'au moins une source d'air sous pression CO1, typiquement une unité de compression d'air, dans une unité de séparation ou de traitement d'air S et/ou au moins un réservoir R contenant ledit gaz, typiquement sous forme au moins partiellement liquide, relié à la ligne L_{G} par une vanne sensible à la pression V et/ou une autre vanne commandée. Typiquement, la pression de l'air fourni par la source C01 au système est supérieure à celui fourni par les sources CO2 et CO3 à la ligne L_{A}.

Selon l'invention, une ligne C, avantageusement munie d'une vanne de contrôle et de détente D, permet d'établir sélectivement une liaison entre les parties amont des lignes L_{G} et L_{A}.

En fonctionnement normal ou nominal, au moins la conduite L_{G} est alimentée en gaz de l'air séparé ou traité dans l'unité S, elle-même alimentée en air sous pression en provenance de la source CO1, le réservoir R n'étant pas normalement mis à contribution, sauf éventuellement en cas de pic de demande dans la conduite L_{G}. Parallèlement, la ligne L_{A} est alimentée en air sous pression en provenance d'au moins une des sources CO2, CO3. En cas de défaillance de l'une de ces sources CO2, CO3, comme représenté sur la Figure 3, au moins une partie du flux d'air en provenance de la source CO1 est adressée, typiquement détendue ou abaissée par contrôle de la source CO1, via la ligne C, à la ligne L_{A} pour conserver dans celle-ci le flux d'air comprimé requis. Si besoin est, l'unité S peut être au moins partiellement isolée en amont par une vanne de contrôle et/ou d'isolation V, l'unité S fonctionnant en ce cas en marche réduite, le gaz de l'air dans la ligne L_{G} étant fourni en tout ou partie par la réserve de secours dans le réservoir R. La vanne V peut être à commande manuelle, synchronisée avec l'actionnement de la vanne D ou être actionnée en réponse à au moins un paramètre en sortie du système S, typiquement le débit et/ou la pression du gaz de l'air dans la ligne L_{G}.

Sur la Figure 2, on a représenté une installation conventionelle où l'unité de séparation S fonctionne avec une pression d'alimentation en air sous pression sensiblement identique à celle de l'air comprimé dans le réseau L_{A}. Dans ce cas, les trois sources CO1, CO2, CO3 débitent dans une même conduite T d'où l'air sous pression est réparti vers le réseau d'air comprimé L_{A} et vers l'unité de séparation S pour fourniture à la ligne L_{G}. En cas de défaillance d'une des sources COi, typiquement en cas d'arrêt d'un compresseur (CO1 sur la figure 4) les sources restantes CO2, CO3 sont totalement affectées à la fourniture d'air comprimé à la ligne LA, la vanne V étant fermée et isolant le système S, la réserve de gaz dans le réservoir R prenant le relai pour assurer la fourniture du gaz de l'air dans la ligne L_{G}.

L'unité de séparation ou de traitement S est au moins en partie du type à distillation cryogénique et/ou du type à membrane de perméation et/ou du type à adsorption à variation de pression pour la fourniture d'azote et/ou d'air enrichi en oxygène et/ou d'oxygène pur et/ou d'air sec déshydraté et, le cas échéant, décarbonaté, et est capable de fonctionner, sur commande ou automatiquement selon la demande de gaz, en au moins une condition de marche réduite, permettant ainsi de réduire sa consommation en air comprimé.

Dans le cas, où les sources d'air sous pression COi, sont des compresseurs indépendants, ceux-ci sont généralement pourvus de moyens m de contrôle et/ou de régulation automatique (marche à vide, arrêt, régulations de débit ...) qui les fait s'adapter aux besoins momentanés de la ligne d'air L_{A} et/ou de l'unité S, permettant ainsi d'optimiser les consommations d'énergie.

De plus, un couplage selon l'invention permet d'obtenir une marche réduite sur la production de gaz de l'air avec économie d'énergie car l'air excédentaire disponible pour la séparation peut être en partie rebasculé sur le réseau d'air comprimé, avec réduction de la puissance consommée corrélative des compresseurs affectés normalement à ce réseau d'air comprimé.

On prévoira avantageusement à cet effet un système de contrôle des sources d'air comprimé capable de moduler les débits d'air fournis en fonction de la pression et/ou du débit souhaités dans l'une ou l'autre des lignes, par exemple par mise à vide ou arrêt de certains compresseurs ou réduction de débit de ces derniers.

A titre d'exemple, avec une unité S du type à distillation cryogénique pour la fourniture d'azote, une installation combinée suivant la Figure 1, avec un compresseur CO1 capable de suppléer la défaillance ou l'interruption pour maintenance d'un des compresseurs de la paire CO2, CO3, permet de réduire l'investissement et la puissance installée pour la compression d'air de près de 25 % et d'optimiser l'énergie spécifique lors des phases de production d'azote en marche réduite.

Quoique la présente invention ait été décrite en relation avec des modes de réalisation particuliers, elle ne s'en trouve pas limitée mais est au contraire susceptible de modifications et de variantes qui apparaîtront à l'homme de l'art, dans le cadre des revendications ci-après.

Ainsi si, en règle générale, les lignes L_{A} et L_{G} approvisionnent des sites en partie communs, elles peuvent également approvisionner, au moins en partie, une ou plusieurs mêmes installations sur un site donné, par exemple des brûleurs ou unités de combustion, des unités de traitement d'affluents notamment mettant en oeuvre des ozoneurs alimentés en air et/ou oxygène, ou plus généralement toute installation utilisant au moins un gaz de l'air et mettant en oeuvre au moins un équipement ou un instrument utilisant de l'air comprimé, le cas échéant, déshydraté, par passage dans une unité S de type sécheur, à membrane et/ou à adsorption.

## Revendications

1. Procédé de fourniture d'air comprimé à des systèmes utilisateurs et de production et de distribution d'au moins un gaz de l'air séparé dans au moins un appareil de traitement de l'air (S), comprenant les étapes de générer, en mode de fonctionnement nominal, au moins un premier flux d'air sous une première pression et un second flux d'air sous une deuxième pression affectés respectivement à la fourniture d'air comprimé et à la production dudit gaz de l'air, la deuxième pression étant supérieure à la première pression, et, en mode de fonctionnement temporaire, d'affecter au moins une partie du second flux d'air, détendue, à la fourniture d'air comprimé.

2. Procédé selon la revendication 1, **caractérisé en ce qu'**en mode de fonctionnement temporaire, le gaz de l'air est fourni au moins en partie par un réservoir dudit gaz (R).

3. Procédé selon la revendication 2, **caractérisé en ce que**, en mode de fonctionnement temporaire, la totalité du second flux d'air est affectée à la fourniture d'air comprimé.

4. Procédé selon les revendications 1 à 3, **caractérisé en ce que** le second flux d'air est réglable en pression.

5. Procédé selon l'une des revendications précédentes, **caractérisé en ce qu'**on fait fonctionner au moins temporairement l'appareil de séparation d'air (S) en au moins une condition de marche réduite.

6. Procédé selon l'une des revendications précédentes, **caractérisé en ce que** le gaz de l'air est l'azote.

7. Procédé selon l'une des revendications précédentes, **caractérisé en ce que** le gaz de l'air est l'oxygène.

8. Procédé selon l'une des revendications précédentes, **caractérisé en ce que** le gaz de l'air est de l'air sec.

9. Procédé selon l'une des revendications précédentes, **caractérisé en ce qu'**on exploite, dans une même installation consommatrice, au moins une partie de l'air comprimé et au moins une partie dudit gaz de l'air.

10. Installation combinée comprenant au moins un système de distribution d'air comprimé (L_{A}) à des systèmes utilisateurs, connecté à au moins une première source (CO2, CO3) d'air sous une première pression et au moins un système (L_{G}) de production et de distribution d'au moins un gaz de l'air normalement connecté à au moins une deuxième source (CO1) d'air sous une deuxième pression supérieure à la première pression, et des moyens (V ; D) pour commuter au moins temporairement et détendre le flux d'air de la deuxième source (CO1) sur le système de fourniture d'air (L_{A}).

11. Installation selon la revendication 10, **caractérisée en ce que** les moyens de commutation comprennent des moyens (V) pour isoler le système de production de gaz de l'air (L_{G}) de la deuxième source (CO1).

12. Installation selon la revendication 11, **caractérisée en ce que** les moyens d'isolation comprennent un moyen de vanne sensible à au moins un paramètre (x) en sortie du système de production de gaz de l'air.

13. Installation selon la revendication 12, **caractérisée en ce que** le paramètre (x) et le débit de gaz de l'air produit.

14. Installation selon l'une des revendication 10 à 13, **caractérisée en ce que** le système de production (L_{G}) comprend en outre au moins un réservoir (R) dudit gaz de l'air.

15. Installation selon l'une des revendications 10 à 14, **caractérisée en ce qu'**elle comporte des moyens (m) de contrôle des paramètres des flux d'air fournis par les sources (COᵢ).

16. Installation selon l'une des revendications 10 à 15, **caractérisée en ce qu'**au moins une des première et deuxième sources (CO1, CO2, CO3) est constituée par une unité de compression.

17. Installation selon la revendication 15 et la revendication 16, **caractérisée en ce qu'**elle comporte des moyens (m) de contrôle des unités de compression (COᵢ).

18. Installation selon l'une des revendications 10 à 17, **caractérisée en ce que** le système de production de gaz de l'air comprend au moins une unité de séparation (S) au moins en partie du type à adsorption.

19. Installation selon l'une des revendications 10 à 18, **caractérisée en ce que** le système de production de gaz de l'air comprend au moins une unité de séparation (S) au moins en partie du type à perméation.

20. Installation selon l'une des revendications 10 à 19, **caractérisée en ce que** le système de production de gaz de l'air comprend au moins une unité de séparation (S) au moins en partie du type à distillation cryogénique.

## Patentansprüche

1. Verfahren zur Lieferung von Druckluft zu verbrauchenden Systemen und zur Produktion und Verteilung zumindest eines Luftgases, das in zumindest einer Luftverarbeitungsvorrichtung (S) separiert wird, das die folgenden Schritte umfasst: im normalen Betriebsmodus das Erzeugen zumindest eines ersten Luftstroms unter einem ersten Druck und eines zweiten Luftstroms unter einem zweiten Druck, die für die Lieferung komprimierter Luft beziehungsweise der Produktion des Luftgases bereitgestellt werden, wobei der zweite Druck größer als der erste Druck ist; und in einem temporären Betriebsmodus das Bereitstellen zumindest eines entspannten Teils des zweiten Luftstroms für die Lieferung komprimierter Luft.

2. Verfahren nach Anspruch 1, **dadurch gekennzeichnet, dass** im temporären Betriebsmodus das Luftgas zumindest zum Teil durch ein Reservoir für das Gas (R) geliefert wird.

3. Verfahren nach Anspruch 2, **dadurch gekennzeichnet, dass** im temporären Betriebsmodus der gesamte zweite Luftstrom für die Lieferung komprimierter Luft bereitgestellt wird.

4. Verfahren nach einem der Ansprüche 1 bis 3, **dadurch gekennzeichnet, dass** der Druck des zweiten Luftstroms regelbar ist.

5. Verfahren nach einem der vorhergehenden Ansprüche, **dadurch gekennzeichnet, dass** die Vorrichtung zur Luftseparation (S) zumindest zeitweise in zumindest einem Zustand reduzierter Geschwindigkeit betrieben wird.

6. Verfahren nach einem der vorhergehenden Ansprüche, **dadurch gekennzeichnet, dass** das Luftgas Stickstoff ist.

7. Verfahren nach einem der vorhergehenden Ansprüche, **dadurch gekennzeichnet, dass** das Luftgas Sauerstoff ist.

8. Verfahren nach einem der vorhergehenden Ansprüche, **dadurch gekennzeichnet, dass** das Luftgas trockene Luft ist.

9. Verfahren nach einem der vorhergehenden Ansprüche, **dadurch gekennzeichnet, dass** in ein und derselben Verbrauchsanlage zumindest ein Teil der komprimierten Luft und zumindest ein Teil des Luftgases genutzt wird.

10. Kombinationsanlage mit zumindest einem System zur Verteilung komprimierter Luft (L_{A}) zu Verbrauchersystemen, das mit zumindest einer ersten Quelle (CO2, CO3) für Luft unter einem ersten Druck verbunden ist, und mit zumindest einem System (L_{G}) zur Produktion und zur Verteilung von zumindest einem Luftgas, das normalerweise mit zumindest einer zweiten Quelle (CO1) für Luft unter einem zweiten Druck, der höher als der erste Druck ist, verbunden ist, und mit Mitteln (V; D), um den Luftstrom von der zweiten Quelle (CO1) zumindest zeitweise auf das Luftversorgungssystem (L_{A}) umzuschalten und zu entspannen.

11. Anlage nach Anspruch 10, **dadurch gekennzeichnet, dass** die Umschaltmittel Mittel (V) umfassen, um das System zur Produktion von Luftgas (L_{G}) von der zweiten Quelle (CO1) zu isolieren.

12. Anlage nach Anspruch 11, **dadurch gekennzeichnet, dass** die Isoliermittel ein Ventilmittel umfassen, das auf zumindest einen Ausgangsparameter (x) des Systems zur Produktion von Luftgas empfindlich ist.

13. Anlage nach Anspruch 12, **dadurch gekennzeichnet, dass** der Parameter (x) die Durchflussmenge des produzierten Luftgases ist.

14. Anlage nach einem der Ansprüche 10 bis 13, **dadurch gekennzeichnet, dass** das Produktionssystem (L_{G}) außerdem zumindest ein Reservoir (R) für das Luftgas umfasst.

15. Anlage nach einem der Ansprüche 10 bis 14, **dadurch gekennzeichnet, dass** sie Mittel (m) zur Steuerung der Parameter der von den Quellen (COi) gelieferten Luftströme umfasst.

16. Anlage nach einem der Ansprüche 10 bis 15, **dadurch gekennzeichnet, dass** zumindest eine der ersten und zweiten Quellen (CO1, CO2, CO3) aus einer Kompressionseinheit besteht.

17. Anlage nach Anspruch 15 und Anspruch 16, **dadurch gekennzeichnet, dass** sie Mittel (m) zur Steuerung der Kompressionseinheiten (COi) umfasst.

18. Anlage nach einem der Ansprüche 10 bis 17, **dadurch gekennzeichnet, dass** das System zur Produktion von Luftgas zumindest eine Separationseinheit (S) umfasst, die zumindest teilweise von der mit Adsorption arbeitenden Art ist.

19. Anlage nach einem der Ansprüche 10 bis 18, **dadurch gekennzeichnet, dass** das System zur Produktion von Luftgas zumindest eine Separationseinheit (S) umfasst, die zumindest teilweise von der mit Permeation arbeitenden Art ist.

20. Anlage nach einem der Ansprüche 10 bis 19, **dadurch gekennzeichnet, dass** das System zur Produktion von Luftgas zumindest eine Separationseinheit (S) umfasst, die zumindest teilweise von der mit Tiefsttemperaturdestillation arbeitenden Art ist.

## Claims

1. Process for delivering compressed air to user systems and for producing and distributing at least one air gas separated in at least one air treatment unit (S), comprising the steps of generating, in nominal operating mode, at least a first air flow at a first pressure and a second air flow at a second pressure which are assigned respectively to the delivery of compressed air and to the production of the said air gas, the second pressure being higher than the first pressure and, in temporary operating mode, of assigning at least a part of the second air flow, with the pressure released, to the delivery of compressed air.

2. Process according to Claim 1, **characterized in that**, in temporary operating mode, the air gas is provided at least in part by a reservoir (R) of the said gas.

3. Process according to Claim 2, **characterized in that**, in temporary operating mode, all of the second air flow is assigned to the delivery of compressed air.

4. Process according to Claims 1 to 3, **characterized in that** the pressure of the second air flow can be adjusted.

5. Process according to one of the preceding claims, **characterized in that** the air separation unit (S) is at least temporarily operated in at least one reduced running status.

6. Process according to one of the preceding claims, **characterized in that** the air gas is nitrogen.

7. Process according to one of the preceding claims, **characterized in that** the air gas is oxygen.

8. Process according to one of the preceding claims, **characterized in that** the air gas is dry air.

9. Process according to one of the preceding claims, **characterized in that** at least a part of the compressed air and at least a part of the said air gas are employed in the same consumer plant.

10. Combined plant comprising at least one system (L_{A}) for distributing compressed air to user systems, which is connected to at least one first air source (CO2, CO3) at a first pressure, and at least one system (L_{G}) for producing and distributing at least one air gas which is normally connected to at least one second air source (CO1) at a second pressure higher than the first pressure, and means (V; D) for at least temporarily switching and reducing the pressure of the air flow from the second source (CO1) to the air delivery system (L_{A}).

11. Plant according to Claim 10, **characterized in that** the switching means comprise means (V) for isolating the air gas production system (L_{G}) from the second source (CO1).

12. Plant according to Claim 11, **characterized in that** the isolating means comprise a valve means sensitive to at least one output parameter (x) of the air gas production system.

13. Plant according to Claim 12, **characterized in that** the parameter (x) is the flow rate of air gas produced.

14. Plant according to one of Claims 10 to 13, **characterized in that** the production system (L_{G}) furthermore comprises at least one reservoir (R) of the said air gas.

15. Plant according to one of Claims 10 to 14, **characterized in that** it includes means (m) for controlling the parameters of the air flows provided by the sources (COi).

16. Plant according to one of Claims 10 to 15, **characterized in that** at least one of the first and second sources (CO1, C02, CO3) consists of a compression unit.

17. Plant according to Claim 15 and Claim 16, **characterized in that** it includes means (m) for controlling the compression units (COi).

18. Plant according to one of Claims 10 to 17, **characterized in that** the air gas production system comprises at least one separation unit (S) which is at least in part of the adsorption type.

19. Plant according to one of Claims 10 to 18, **characterized in that** the air gas production system comprises at least one separation unit (S) which is at least in part of the permeation type.

20. Plant according to one of Claims 10 to 19, **characterized in that** the air gas production system comprises at least one separation unit (S) which is at least in part of the cryogenic distillation type.
